# EUROPÄISCHE PATENTANMELDUNG

(11) **EP 3 006 382 A1**
(43) Veröffentlichungstag der Anmeldung: **13.04.2016**
(21) Anmeldenummer: 15181546.1
(22) Anmeldetag: 19.08.2015
(51) Int. Cl.: B65G 47/90

(54) **GREIF- UND/ODER MANIPULATIONSEINHEIT UND VERFAHREN ZUR HANDHABUNG VON OBJEKTEN**

(30) Priorität: 09.09.2014 DE 102014218040
(71) Anmelder: Krones Aktiengesellschaft, 93073 Neutraubling (DE)
(72) Erfinder: UNTERSEHER, Josef, 93073 Neutraubling (DE); HAAS, Johann, 93073 Neutraubling (DE)
(74) Vertreter: Benninger, Johannes

(57) **Zusammenfassung**

Die Erfindung betrifft eine Greif- und/oder Manipulationseinheit (20), die einer Auflageebene (16) und/oder einem Förderabschnitt (18) einer Vorrichtung zur Handhabung, Förderung, Gruppierung und/oder Verpackung von Artikeln, Stückgütern, Gruppierungen und/oder Gebinden (10) zugeordnet ist und die oberhalb der Auflageebene (16) und/oder dem Förderabschnitt (18) zumindest entlang einer in etwa horizontal ausgerichteten Bewegungsachse (30) beweglich und/oder um eine vertikale Achse rotierbar ist. Die Greif- und/oder Manipulationseinheit (20) weist wenigstens drei zueinander bewegliche und/oder gegeneinander zustellbare Greifelemente (34) zum Erfassen einzelner Artikel, Stückgüter, Gruppierungen und/oder Gebinde (10) und zum Drehen und/oder Verschieben dieser auf der Auflageebene (16) und/oder dem Förderabschnitt (18) auf.

Die Erfindung betrifft zudem ein Verfahren zur Handhabung von Artikeln, Stückgütern, Gruppierungen und/oder Gebinden (10), die auf einer Auflageebene einer Horizontalfördereinrichtung (12) befördert und dort während ihres Transports mittels einer Greif- und/oder Manipulationseinheit (20) verschoben und/oder gedreht werden.

## Beschreibung

Die vorliegende Erfindung betrifft eine Greif- und/oder Manipulationseinheit mit den Merkmalen des unabhängigen Anspruchs 1 sowie ein Verfahren zur Handhabung von Artikeln, Stückgütern, Gruppierungen und/oder Gebinden mit den Merkmalen des unabhängigen Verfahrensanspruchs 10.

Bekannte Verpackungs- oder Palettieranlagen zum Stapeln und Palettieren von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge zu einer Handhabungseinrichtung befördert werden. Dort erfolgt eine Verschiebung, Ausrichtung und/oder Drehen einzelner Stückgüter oder Gebinde, um diese in eine geeignete räumliche Anordnung zu bringen, die sich anschließend in Gruppierstationen zu stapelfähigen Stückgut- oder Gebindelagen zusammenschieben lassen.

In aktuellen Abfüll- und Verpackungslinien werden unterschiedliche Verfahren zum Drehen von Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können bspw. auch an Mehrachsroboterarmen angeordnet sein, die seitlich an den Horizontalfördereinrichtungen platziert sind.

Bei einer solchen Handhabung von Stückgütern oder Gebinden werden diese in der Praxis zum Zwecke eines Versetzens und/oder ihrer Ausrichtung erfasst, angehoben und in eine gewünschte Position bzw. Orientierung innerhalb einer Gruppierung überführt. Hierzu sind aus dem Stand der Technik bereits zahlreiche Greifvorrichtungen bekannt, so bspw. aus der EP 2 388 216 A1. Diese bekannte Greifvorrichtung besitzt zwei horizontal voneinander beabstandete und an einem zwischengeordneten Träger über mechanische Verbindungen angeordnete Greifarme. Die Greifarme können aufeinander zubewegt werden, um Objekte zu erfassen. Weiter sind die Greifarme bei definierter Krafteinwirkung in vertikaler Richtung und entgegen dem Träger vom Träger lösbar. Am freien Ende besitzen beide Greifarme Klemmbacken, die bei Erfassen von Objekten mit den jeweiligen Objekten in Oberflächenkontakt stehen.

Eine weitere Greifvorrichtung zeigt beispielsweise die DE 102 04 513 A1. Die Greifvorrichtung der DE-Patentanmeldung besitzt mehrere sich gegenüberliegende Greifarme, welche in einem Mittelstück geführt sind. Ein Greifarm ist mittels eines Stellgliedes in Bezug auf einen weiteren Greifarm verschiebbar, so dass beide Greifarme geschlossen werden können. An den unteren Enden der Greifarme sind an den einander zugewandten Seiten Greifabschnitte zum Greifen von Baustoffpaketen vorgesehen.

Bei den bekannten Greifvorrichtungen müssen die zu handhabenden Objekte mit definierter Klemmkraft beaufschlagt werden, um diese mittels Haftreibung an den Greifarmen fixieren und anheben zu können. Insbesondere bei empfindlichen Objekten besteht in der Praxis das Risiko einer Beschädigung. Wünschenswert sind daher Einrichtungen bzw. Systeme, welche ein Greifen von empfindlichen Objekten erlauben, ohne dass diese hierbei eingedrückt oder auf sonstige Weise beschädigt werden können. Ein weiterer Nachteil der bekannten Handhabungssysteme besteht in der Notwendigkeit einer Beweglichkeit in mehreren Bewegungsachsen, um die zu handhabenden Objekte nicht nur greifen, sondern auch anheben zu können.

Die bekannten Anschlagsysteme funktionieren nur bis zu einer bestimmten Geschwindigkeit. Die Pakete prallen immer mit voller Geschwindigkeit auf einen stehenden Anschlag. Zudem ist die Position der Pakete nach dem Drehen oftmals nicht exakt definiert. Beim Drehen mit zwei unterschiedlich schnell laufenden Bändern beeinflusst die auftretende Reibung zwischen den Paketen und der jeweiligen Auflageebene das Positionierungsergebnis. Diese Reibungsverhältnisse können sich zudem im Laufe der Zeit ändern. Die bekannten Greifersysteme mit Portal- oder Roboterantrieben sind in ihren Leistungen begrenzt.

Ein erstes Ziel der Erfindung besteht darin, ein Handhabungssystem zur Verfügung zu stellen, das eine sehr schnelle Handhabung und/oder Ausrichtung sensibler Objekte unter Reduzierung oder Ausschluss des Risikos ihrer Beschädigung erlaubt. Außerdem soll eine Greif- und/oder Manipulationseinheit mit möglichst wenigen Bewegungsachsen arbeiten können, um ihren Aufbau und ihre Antriebselemente gegenüber bekannten Manipulationseinheiten zu vereinfachen.

Dieses erste Ziel der Erfindung wird mit dem Gegenstand des unabhängigen Anspruchs 1 erreicht. Merkmale vorteilhafter Weiterbildungen der Erfindung finden sich in den davon abhängigen Ansprüchen. So schlägt die vorliegende Erfindung zur Erreichung des genannten Ziels eine Greif- und/oder Manipulationseinheit vor, die insbesondere einer Auflageebene und/oder einem Förderabschnitt einer Vorrichtung zur Handhabung, Förderung, Gruppierung und/oder Verpackung von Artikeln, Stückgütern, Gruppierungen und/oder Gebinden zugeordnet sein kann. Die Greif- und/oder Manipulationseinheit ist zudem oberhalb der Auflageebene und/oder dem Förderabschnitt angeordnet und zumindest entlang einer in etwa horizontal ausgerichteten Bewegungsachse beweglich und/oder um eine vertikale Achse rotierbar. Gemäß der vorliegenden Erfindung weist die Greif- und/oder Manipulationseinheit wenigstens drei zueinander bewegliche und/oder gegeneinander zustellbare Greifelemente zum Erfassen einzelner Artikel, Stückgüter, Gruppierungen und/oder Gebinde und zum Drehen und/oder Verschieben dieser auf der Auflageebene und/oder dem Förderabschnitt auf. Die Greifelemente können bspw. durch vertikale Stäbe, durch Streben mit Anlageflächen o. dgl. gebildet sein. Grundsätzlich können die Greifelemente die unterschiedlichsten Ausgestaltungen aufweisen, sofern sie mit geeigneten Kontaktelementen oder Kontaktflächen zur Berührung, Kontaktierung und zur Handhabung der zu manipulierenden Artikel, Stückgüter, Gruppierungen und/oder Gebinde ausgestattet sind. Die Manipulation erfolgt dabei im Wesentlichen durch Verschiebebewegungen, da ein festes Greifen und Anheben der zu manipulierenden Artikel, Stückgüter, Gruppierungen und/oder Gebinde nicht vorgesehen ist, sondern nur ein Drehen und/oder Verschieben bzw. ein kombiniertes Drehen und Verschieben auf der Auflagefläche bzw. dem Förderabschnitt.

In einer bevorzugten Ausführungsvariante weist die Greif- und/oder Manipulationseinheit einen Rotationsantrieb mit einer in etwa vertikalen Drehachse auf, welcher oberhalb der Auflageebene und/oder dem Förderabschnitt angeordnet ist. Zudem kann die Greif- und/oder Manipulationseinheit zumindest in einer Richtung entlang einer in etwa horizontalen Bewegungsachse linear beweglich sein, wobei diese Bewegungsachse oberhalb und ungefähr parallel zu einer Förderrichtung der Auflageebene bzw. dem Förderabschnitt liegt. Dies stellt die einfachste Ausführungsvariante dar, die bereits das oben genannte Ziel der Erfindung verwirklicht. Hierbei ist die oberhalb der Auflage- und/oder Förderebene angeordnete bzw. aufgehängte Greif- und/oder Manipulationseinheit zumindest rotierbar, so dass die jeweils erfassten Objekte, Stückgüter oder Gebinde durch relativ loses und mit wenig Kraftbeaufschlagung fungierendes Greifen leicht gedreht werden können, bspw. um 90 Grad oder um beliebige andere Drehwinkel. Bei einer beweglichen Auflage- oder Förderebene, bei der die zu drehenden Objekte, Artikel, Stückgüter oder Gebinde während ihrer Manipulation nicht verzögert werden, sondern stetig weiterbewegt werden sollen, ist es zudem sinnvoll, wenn sich die Greif- und/oder Manipulationseinheit während des Drehvorganges ein kurzes Stück in Richtung der Förderbewegung bewegen kann. Diese Bewegung kann insbesondere annähernd synchron mit der Fördergeschwindigkeit der Auflage- oder Förderebene erfolgen, um den zu handhabenden Artikeln keine Geschwindigkeitsänderung aufzuprägen. Sollen die auf der Auflage- oder Förderebene stehenden bzw. dort bewegten Objekte, Artikel, Stückgüter, Gruppierungen und/oder Gebinde nicht nur gedreht, sondern ggf. auch quer zur Förderrichtung verschoben werden, ist es zudem sinnvoll, wenn die Greif- und/oder Manipulationseinheit eine Bewegungsachse quer zur Förderrichtung aufweist.

Bei allen erfindungsgemäßen Varianten und in allen auftretenden Fällen genügt eine Beweglichkeit der Greif- und/oder Manipulationseinheit innerhalb einer parallelen Bewegungsebene oberhalb der Auflage- oder Förderebene für die zu manipulierenden Artikel, Stückgüter, Gruppierungen und/oder Gebinde, zu der außerdem eine Rotierbarkeit um eine vertikale Achse hinzukommt. Dagegen ist eine Beweglichkeit in vertikaler Richtung weder erforderlich noch sinnvoll, so dass sich gegenüber bekannten Handhabungseinrichtungen eine stark vereinfachte Bauweise ergibt. Auf die vertikale Beweglichkeit der Greif- und/oder Manipulationseinheit kann verzichtet werden, wenn der Verstellbereich ihrer Greifelemente ausreichend groß ist, so dass stetig beförderte Objekte und Artikel zwischen den jeweils geöffneten Greifelementen hindurchpassieren können, während zugestellte Greifelemente die zu drehenden und/oder zu verschiebenden Objekte oder Artikel seitlich erfassen und sich anschließend wieder öffnen.

Die verstellbaren Greifelemente jeder Greif- und/oder Manipulationseinheit können bspw. durch Stäbe, Schieber, Stangen o. dgl. gebildet sein, die den jeweiligen Artikel bzw. das jeweilige Stückgut oder Gebinde bzw. die jeweilige Gruppierung von zumindest drei Außenseiten angreifen. Die verstellbaren Greifelemente weisen vorzugsweise jeweils ungefähr vertikale Längserstreckungsrichtungen auf und sind jeweils innerhalb von ungefähr horizontal ausgerichteten Bewegungsebenen reversibel beweglich. Auf diese Weise können die Greifelemente die zu handhabenden Artikel, Stückgüter etc. sehr schnell an ihren Seitenflächen oder vertikalen Seitenkanten erfassen, drehen, verschieben etc. und diese anschließend sehr schnell wieder freigeben. Weitere Artikel oder Stückgüter, die nicht erfasst werden sollen, können problemlos zwischen den auseinander bewegten oder auseinander gefahrenen oder geschwenkten Greifelementen hindurchpassieren.

Wahlweise können die wenigstens drei Greifelemente konzentrisch zueinander verstellbar sein; insbesondere können sie entlang von horizontalen Linearachsen verschiebbar sein, die Teil eines rotierbaren Kopfes der erfindungsgemäßen Greif- und/oder Manipulationseinheit sind. Diese lineare Verstellbarkeit kann z.B. mittels separaten Linearmotoren gewährleistet werden. Eine schnellere und leichter zu bauende Verstellbarkeit kann auch mittels eines Drehantriebes erfolgen, der über einen Riemenantrieb und geeignete Umlenkungen für eine synchrone Verstellbarkeit der drei oder vier konzentrisch angeordneten Greifelemente sorgen kann.

Wahlweise können die wenigstens drei Greifelemente auch jeweils an Schwenkhebeln angeordnet sein, die in der Greif- und/oder Manipulationseinheit gelagert und um ungefähr vertikale Schwenkachsen verschwenkbar und/oder rotierbar sind. Vorzugsweise umfasst die erfindungsgemäße Greif- und/oder Manipulationseinheit insgesamt vier solcher Greifelemente, die jeweils an rotierbaren Schwenkhebeln gelagert sind. Durch einen geeigneten Antrieb kann gewährleistet werden, dass die Schwenkhebel mit den daran angeordneten Greifelementen jeweils gleichsinnig und weitgehend synchron in ungefähr gleichen Schwenkwinkeln verschwenkbar und/oder rotierbar sind.

Bei der vorliegenden Erfindung können bspw. vorhandene Portalsysteme eingesetzt werden, bei denen jedoch nur noch einzelne Bewegungsachsen benötigt werden. So können je nach Ausführungsvariante Bewegungsachsen quer zur Förderrichtung entfallen, und zwar in horizontaler wie auch in vertikaler Bewegungsrichtung. Allerdings wird eine zusätzliche Drehachse benötigt, mit der der Greifer gedreht werden kann. Der Greifer bzw. die Greif- oder Manipulationseinheit hat bewegliche Greifelemente mit Klemmbacken o. dgl., die sich im einfachsten Fall radial zum Greifermittelpunkt bewegen können. In einer aufwändigeren Variante können die Greifer einzeln oder paarweise unabhängig voneinander bewegt werden. Die zu greifenden Pakete oder Gebinde werden durch das Zusammenfahren der Greifer zentriert und formschlüssig geklemmt. Die Pakete können in kurzer Zeit gedreht werden. Nach dem Drehen wird die Klemmung wieder gelöst. Hierbei ist es nicht nötig, den Greifer mit einem Vertikalhub von den Paketen zu lösen. Der Greifer kann an den Paketen vorbeifahren und muss für das nächste Paket auch nicht zurück gedreht werden. Es können auch mehrere Greifer/Drehstationen hintereinander geschaltet werden, da es auch möglich ist, dass jeder Greifer nur jedes zweite oder dritte Paket erfasst und dreht.

Die Pakete werden generell formschlüssig gedreht. Es sind weder Formatteile noch eine Bewegung in vertikaler Richtung erforderlich. Gegenüber bekannten Handhabungseinrichtungen können die Verfahrwege und die Zykluszeiten reduziert werden. Zudem können je nach Bedarf einzelne Pakete oder auch mehrere Pakete ohne Drehung durchlaufen.

Ein weiteres Ziel der vorliegenden Erfindung besteht darin, eine vereinfacht aufgebaute Handhabungseinrichtung zum Drehen und/oder Verschieben von Artikeln, Stückgütern, Gruppierungen und/oder Gebinden zur Verfügung zu stellen, die auf einer Auflageebene stehen und/oder von einer Horizontalfördereinrichtung transportiert werden. Diese Handhabungseinrichtung soll eine schnelle und komfortable Handhabung der jeweils zu drehenden und/oder zu verschiebenden Objekte ermöglichen.

Dieses weitere Ziel der Erfindung wird mit dem Gegenstand des Anspruchs 9 erreicht. So schlägt die Erfindung eine Handhabungseinrichtung eines Förderabschnittes einer Vorrichtung zur Handhabung, Förderung, Gruppierung und/oder Verpackung von Artikeln, Stückgütern, Gruppierungen und/oder Gebinden vor, die mit einer oberhalb der Auflageebene und/oder dem Förderabschnitt angeordneten und/oder um eine vertikale Achse rotierbaren Greif- und/oder Manipulationseinheit gemäß einer der zuvor beschriebenen Ausführungsvarianten ausgestattet ist. Diese Greif- und/oder Manipulationseinheit weist wenigstens drei zueinander bewegliche und/oder gegeneinander zustellbare Greifelemente zum Erfassen einzelner Artikel, Stückgüter, Gruppierungen und/oder Gebinde und zum Drehen und/oder Verschieben dieser auf der Auflageebene und/oder dem Förderabschnitt auf. Die Greif- und/oder Manipulationseinheit ist nicht nur um eine vertikale Achse rotierbar, sondern vorzugsweise auch entlang einer in etwa horizontal ausgerichteten Bewegungsachse, die parallel zur Förderrichtung des Förderabschnittes orientiert ist, linear beweglich.

Ein drittes Ziel der Erfindung besteht darin, ein vereinfachtes Verfahren zur Handhabung, zum Drehen und/oder Verschieben von Artikeln, Stückgütern, Gruppierungen und/oder Gebinden zur Verfügung zu stellen, die auf einer Auflageebene stehen und/oder von einer Horizontalfördereinrichtung transportiert werden. Mit diesem Verfahren soll eine schnelle und komfortable Handhabung der jeweils zu drehenden und/oder zu verschiebenden Objekte ermöglicht werden.

Dieses dritte Ziel der Erfindung wird mit dem Gegenstand des unabhängigen Anspruchs 10 erreicht. Das damit definierte Verfahren ermöglicht die Handhabung von Artikeln, Stückgütern, Gruppierungen und/oder Gebinden, die auf einer Auflageebene einer Horizontalfördereinrichtung befördert und dort während ihres Transports mittels einer Handhabungseinrichtung verschoben und/oder gedreht werden, indem die Artikel, Stückgüter, Gruppierungen und/oder Gebinde an wenigstens drei Außenseiten mittels von außen zustellbaren Greifelementen einer Handhabungseinrichtung kontaktiert und unter annähernd synchroner Bewegung der Handhabungseinrichtung in Förderrichtung der Horizontalfördereinrichtung bewegt und/oder gedreht werden. Anschließend werden die Greifelemente aus dem Kontakt mit den Artikeln, Stückgütern, Gruppierungen und/oder Gebinden gebracht, so dass diese zwischen den auseinander bewegten Greifelementen passieren können, wonach die Handhabungseinrichtung gegen die Förderrichtung zu einem folgenden Artikel, Stückgut oder Gebinde bzw. zu einer folgenden Gruppierung entgegen der Förderrichtung bewegt wird und/oder dieses in Förderrichtung zwischen den Greifelementen hindurch- oder vorbeipassieren lässt, bis die Handhabungseinrichtung in Positionierung über dem Artikel, Stückgut oder Gebinde bzw. der Gruppierung ist und die Greifelemente in Kontakt mit dessen/deren Außenseiten gebracht werden, um es/sie zu drehen und/oder zu verschieben.

Bei dem erfindungsgemäßen Verfahren werden die Objekte jeweils formschlüssig gedreht. Es sind weder Formatteile noch eine Bewegung in vertikaler Richtung erforderlich. Gegenüber bekannten Verfahren können die zurückzulegenden Verfahrwege und die Zykluszeiten reduziert werden. Zudem können je nach Bedarf einzelne Pakete oder auch mehrere Pakete ohne Drehung durchlaufen, ohne dass es zu Berührungen mit den Greifelementen und dadurch zu Störungen kommen kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 (a bis d) zeigen schematische Draufsichten aufeinander folgender Prozessphasen bei der Durchführung eines erfindungsgemäßen Verfahrens.
Figuren 2 (a bis c) zeigen schematische Draufsichten aufeinander folgender Prozessphasen bei der Durchführung einer Drehung eines Gebindes.
Figuren 3 (a bis f) zeigen weitere schematische Draufsichten aufeinander folgender Prozessphasen.
Figuren 4 (a bis e) zeigen schematische Draufsichten aufeinander folgender Prozessphasen bei der Durchführung eines entsprechenden Drehvorgangs eines Gebindes.
Figuren 5 (a bis d) zeigen eine Ausführungsvariante einer Greif- und/oder Manipuliereinheit, wie sie zum Drehen von Gebinden gemäß der Figuren 1 bis 4 eingesetzt werden kann.
Figuren 6 (a bis c) zeigen schematische Draufsichten der aufeinander folgenden Prozessphasen einer weiteren Variante des erfindungsgemäßen Verfahrens zur Handhabung von Gebinden mittels einer anderen Ausführungsvariante der erfindungsgemäßen Greif- und/oder Manipulationseinheit.
Figuren 7 (a bis c) und Figuren 8 (a bis f) zeigen schematische Draufsichten aufeinander folgender Prozessphasen einer weiteren Variante eines entsprechenden Drehvorgangs eines Gebindes.
Figuren 9 (a bis c) zeigen eine Ausführungsvariante einer Greif- und/oder Manipuliereinheit, wie sie zum Drehen von Gebinden gemäß der Figuren 6 bis 8 eingesetzt werden kann.
Figuren 10 (a bis d) zeigen schematische Ansichten einer Kraftübertragung mit einem Riemenantrieb.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

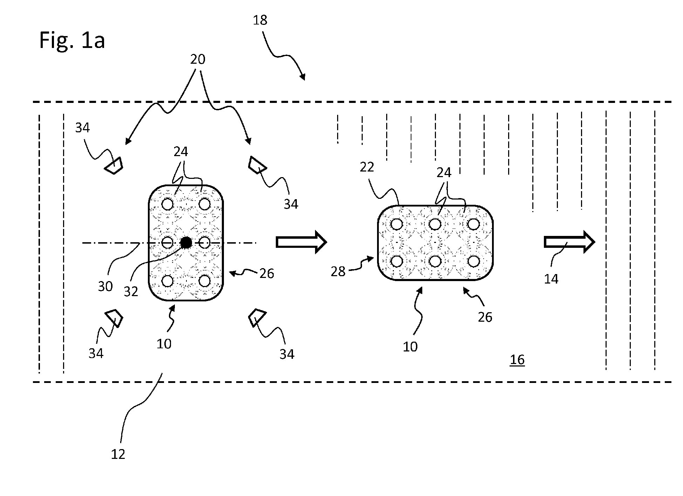

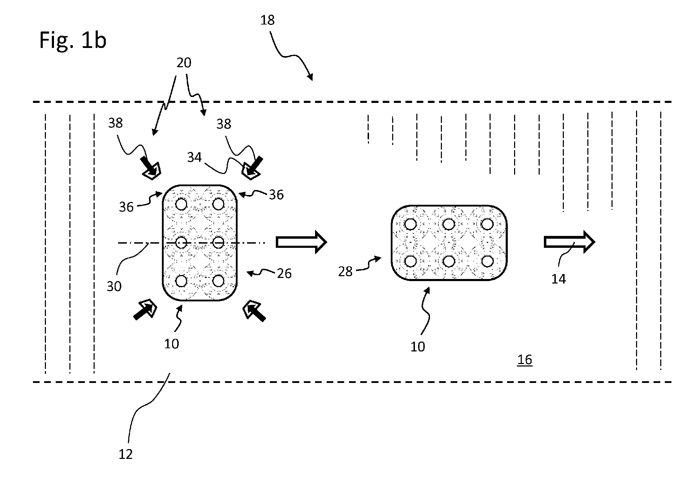

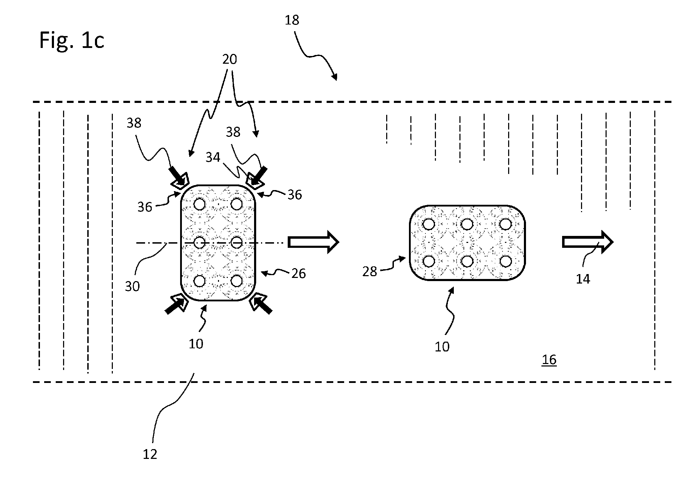

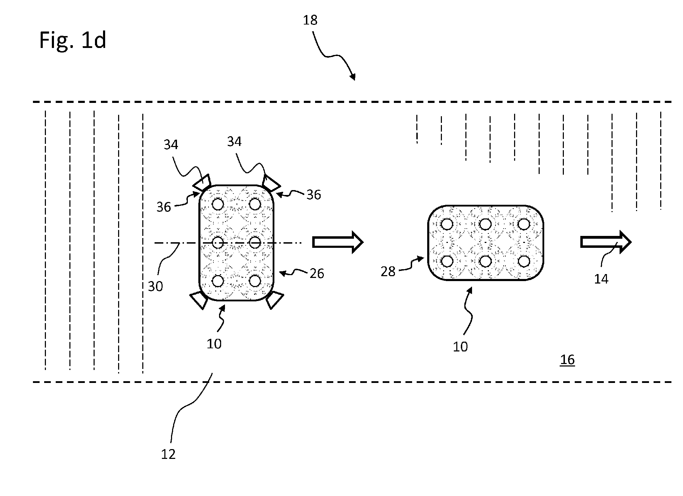

Die insgesamt vier schematischen Draufsichten der Fig. 1 zeigen aufeinander folgende Prozessphasen bei der Durchführung eines erfindungsgemäßen Verfahrens zur Handhabung von Artikeln, Stückgütern, Gruppierungen und/oder Gebinden mittels einer erfindungsgemäßen Greif- und/oder Manipulationseinheit. Im gezeigten Ausführungsbeispiel werden Gebinde 10 in Abständen zueinander auf einer Horizontalfördereinrichtung 12 in einer gleichbleibenden Geschwindigkeit in Förderrichtung 14 bewegt. Die Gebinde 10 können bspw. auf einer sich stetig bewegenden Förder- oder Auflageebene 16 der Horizontalfördereinrichtung 12 stehen und durch deren stetige Bewegung in Förderrichtung 14 befördert werden. in den Figuren 1 a bis 1d ist jeweils ein Förderabschnitt 18 gezeigt, dem eine Greif- und/oder Manipulationseinheit 20 zugeordnet ist, die oberhalb der Auflageebene 16 angeordnet ist.

Die zu manipulierenden Objekte sind in der gezeigten Ausführungsvariante durch Umreifungsgebinde 10 gebildet, die aus jeweils sechs gruppierten und mittels eines Umreifungsbandes 22 zusammengefassten Getränkebehältern 24 bestehen. Diese Umreifungsgebinde 10, bei denen die Behälter 24 in einer 2x3-Formation zusammengefasst sind, werden in Förderrichtung 14 zunächst mit ihren Längsseiten 26 voran befördert, sollen jedoch um 90 Grad gedreht werden, so dass sie in der weiteren Förderbewegung mit ihren Schmalseiten 28 voran befördert werden sollen, so dass sich ihre Längsseiten 26 parallel zu der Förderrichtung 14 befinden.

Anstelle der gezeigten Umreifungsgebinde 10 können jedoch auf der Förder- oder Auflageebene 16 der Horizontalfördereinrichtung 12 auch beliebige andere Objekte, Artikel, Stückgüter oder Artikelgruppierungen befördert und mittels der erfindungsgemäßen Greif- und/oder Manipulationseinheit 20 gedreht und/oder verschoben werden.

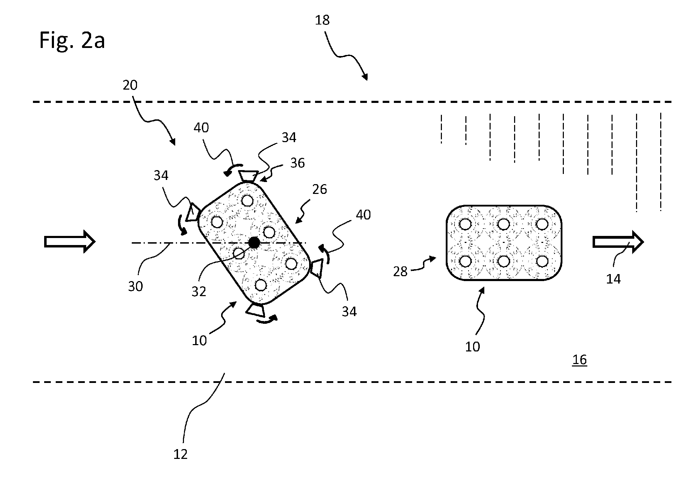

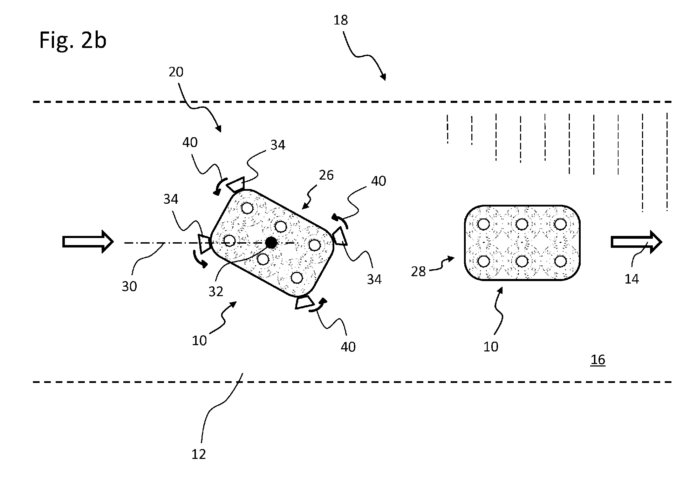

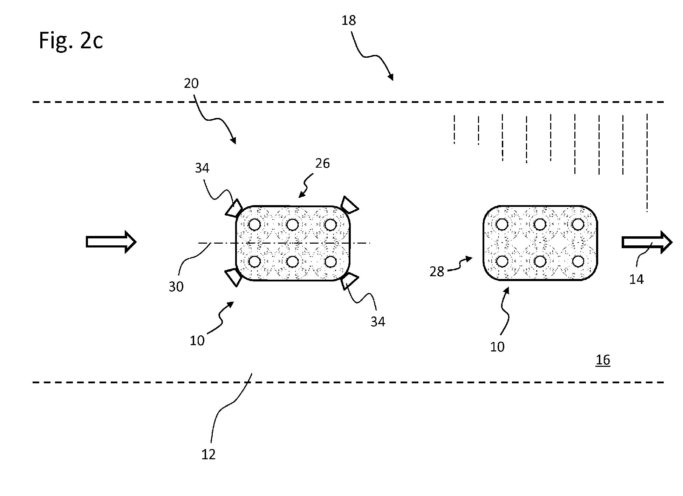

Die Greif- und/oder Manipulationseinheit 20 ist entlang einer in etwa horizontal ausgerichteten Bewegungsachse 30 beweglich bzw. in Förderrichtung 14 und gegen die Förderrichtung 14 verschiebbar sowie um eine vertikale Achse 32 rotierbar, was in den Darstellungen der Fig. 2 näher verdeutlicht wird. Die Drehachse 32 liegt auf der Bewegungsachse 30 und befindet sich zumindest während einer Drehbewegung (Fig. 2) im Mittelpunkt des jeweils kontaktierten und gedrehten Gebindes 10.

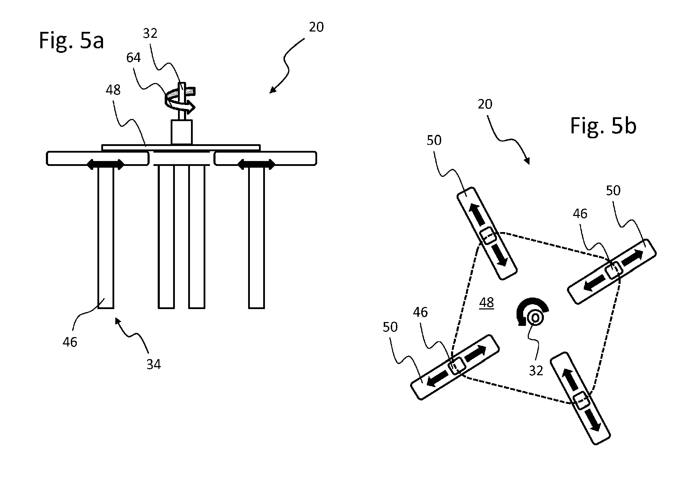

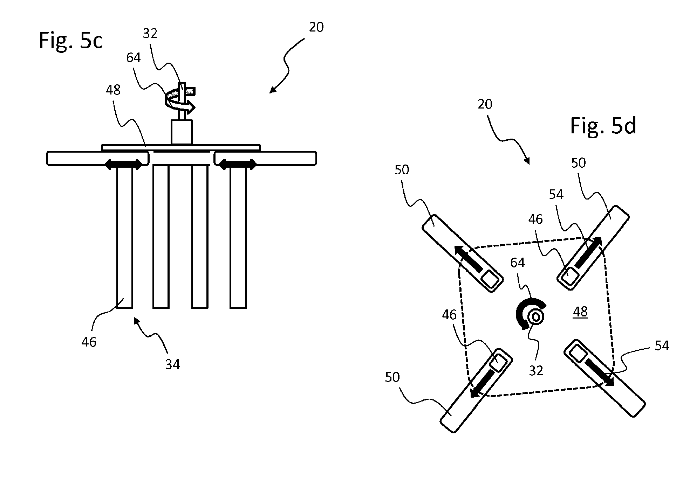

Die Greif- und/oder Manipulationseinheit 20 weist in der gezeigten Ausführungsvariante insgesamt vier zueinander bewegliche und/oder gegeneinander zustellbare Greifelemente 34 zum Erfassen der einzelnen Artikel, Stückgüter, Gruppierungen und/oder Gebinde 10 und zum Drehen und/oder Verschieben dieser auf der Auflageebene 16 und/oder dem Förderabschnitt 18 auf. Die Greifelemente 34 können bspw. durch vertikale Stäbe, durch Streben mit Anlageflächen o. dgl. gebildet sein. Beispielhafte Ausgestaltungen für die Greifelemente 34 sind in den Figuren 5, 9 und 10 dargestellt. Grundsätzlich können die Greifelemente 34 die unterschiedlichsten Ausgestaltungen aufweisen, sofern sie mit geeigneten Kontaktelementen oder Kontaktflächen zur Berührung, Kontaktierung und zur Handhabung der zu manipulierenden Artikel, Stückgüter, Gruppierungen und/oder Gebinde 10 ausgestattet sind.

Die Fig. 1a verdeutlicht eine erste Prozessphase des erfindungsgemäßen Verfahrens, bei dem die Greif- und/oder Manipulationseinheit 20 in Bezug auf ein zu manipulierendes Gebinde 10 zentriert ist, das um 90 Grad gedreht werden soll, ohne von der Auflageebene 16 abgehoben zu werden. Während in Fig. 1 a die Greifelemente 34 noch deutlich vom Gebinde 10 beabstandet sind, werden sie in der in Fig. 1 b gezeigten folgenden Prozessphase in Richtung zu den vier Seitenkanten 36 des Gebindes 10 zugestellt, was durch die Richtungspfeile 38 angedeutet ist. Da die Greifelemente 34 gleichzeitig zum Gebinde 10 zentriert bleiben, bewegt sich die gesamte Greif- und/oder Manipulationseinheit 20 synchron mit derselben Fördergeschwindigkeit wie die Horizontalfördereinrichtung in Förderrichtung 14, d.h. entlang der Bewegungsachse 30. Die Greifelemente 34 müssen jedoch nicht zwingend auf die vertikalen Seitenkanten 36 des Gebindes 10 zentriert werden. Eine Erfassung und exakte Drehung des Gebindes 10 kann gleichermaßen gewährleistet werden, wenn die vier Greifelemente 34 an den Längsseiten 26 in Nähe der Seitenkanten 36 angreifen, was allerdings einen ausreichenden Form- und/oder Kraftschluss erfordert. Eine Kontaktierung der Längs- oder Schmalseiten von Stückgütern oder Gebinden kann insbesondere bei nicht abgerundeten Seitenkanten 36 sinnvoll sein.

Die Darstellung der Fig. 1 c zeigt eine weitere Annäherung der Greifelemente 34 von allen vier Seiten an die vier abgerundeten Seitenkanten 36 des zu drehenden Gebindes 10. Die Fig. 1d zeigt die vier Greifelemente 34 in Kontakt mit den Seitenkanten, so dass keine weitere Zustellbewegung 38 erfolgt. Bei den Zustellbewegungen 38 (Fig. 1b, Fig. 1c) wurde die Greif-/Manipulationseinheit 20 weiterhin synchron zum Gebinde 10 bewegt und zu diesem zentriert. In dieser Position der Greifelemente gemäß Fig. 1d kann die anschließende Drehung (Fig. 2) eingeleitet werden.

Die Figuren 2a bis 2c verdeutlichen eine Drehung des hinteren Gebindes 10 mittels der an den vier Seitenkanten 36 angreifenden Greifelemente 34 der Greif- und/oder Manipulationseinheit 20 um einen Drehwinkel von 90 Grad entgegen des Uhrzeigersinns, so dass die zunächst in Förderrichtung 14 weisende vordere Längsseite 26 des Gebindes 10 in Förderrichtung 14 links zu liegen kommt, während die in Förderrichtung 14 rechte Schmalseite 28 nach dieser Drehung nach vorne weist (Fig. 2c). Die Greif- und/oder Manipulationseinheit 20 wird hierbei während ihrer Vorschubbewegung entlang der Bewegungsachse 30 um ihre Drehachse 32 gedreht, wobei die vier Greifelemente 34 gleichzeitig an den Längskanten 36 des Gebindes 10 anhaften und zum Gebinde 10 bzw. zu dessen Vertikalmittelachse 32 zentriert bleiben. Die Förder- bzw. Auflageebene 16 bewegt sich während dieser Drehung unverändert in Förderrichtung 14 weiter.

Die Manipulation und Drehung des Gebindes 10 erfolgt dabei im Wesentlichen durch eine Verschiebebewegungen ohne Abheben des Gebindes von der Auflageebene 16 der Horizontalfördereinrichtung 12, da ein festes Greifen und Anheben der zu manipulierenden Artikel, Stückgüter, Gruppierungen und/oder Gebinde 10 nicht vorgesehen ist, sondern nur ein Drehen und/oder Verschieben bzw. ein kombiniertes Drehen und Verschieben auf der Auflagefläche 16 bzw. dem Förderabschnitt 18.

Die synchronen Schwenkbewegungen der vier Greifelemente 34 sind durch die vier Richtungspfeile 40 angedeutet (Fig. 2a, Fig. 2b). In der Darstellung der Fig. 2c ist die 90°-Drehung des hinteren Gebindes 10 abgeschlossen, so dass sich die Greif- und/oder Manipulationseinheit 20 nur noch entlang der Bewegungsachse 30 mit dem Gebinde 10 und der Horizontalfördereinheit 12 mitbewegt, jedoch nicht mehr um ihre Drehachse 32 rotiert.

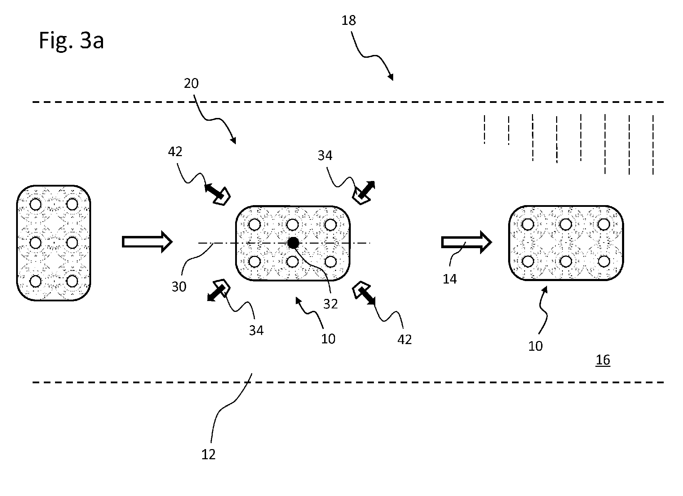

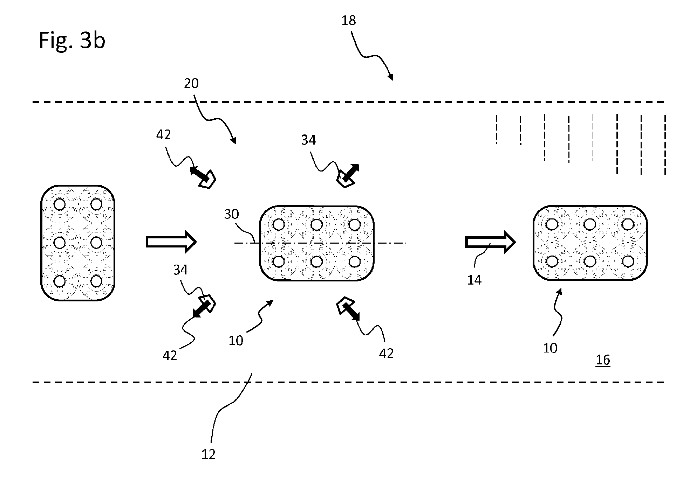

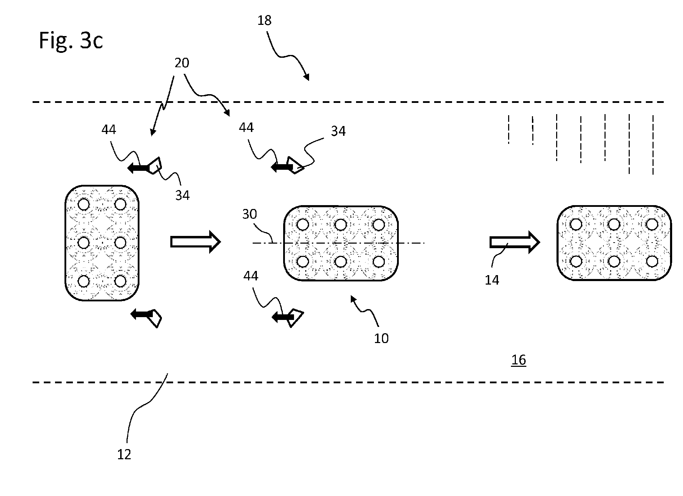

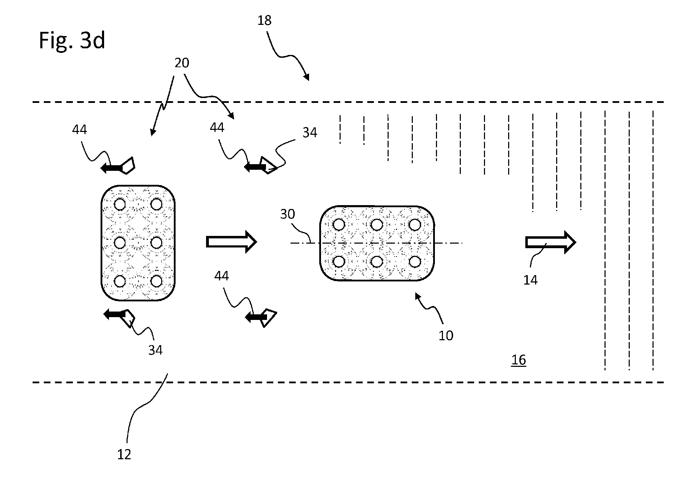

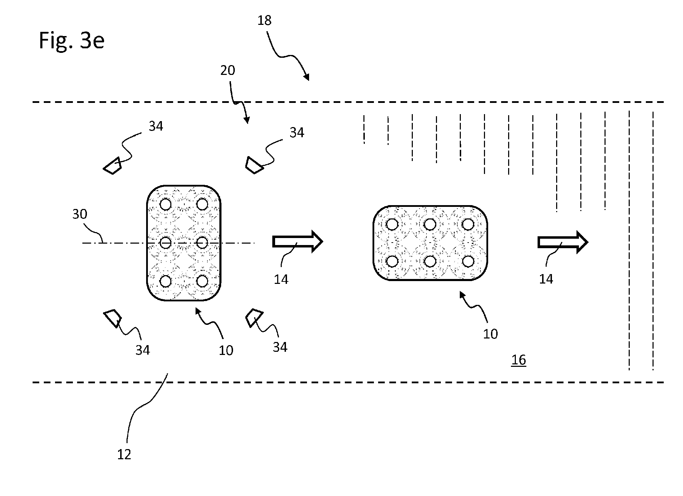

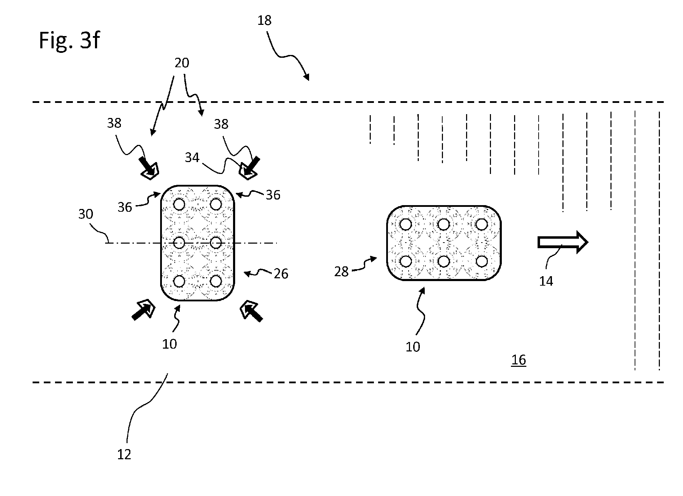

Nachdem das Gebinde 10 auf der Auflageebene 16 gedreht wurde, werden die Greifelemente 34 wieder abgezogen bzw. auseinanderbewegt, was durch die Richtungspfeile 42 in Fig. 3a angedeutet ist. Diese Stellrichtungen 42 der Greifelemente sind in Fig. 3a konzentrisch zur Vertikalmittelachse bzw. Drehachse 32, während ihnen in der in Fig. 3c gezeigten Prozessphase eine Verschiebebewegung 44 entlang der Bewegungsachse 30 gegen die Förderrichtung 14 überlagert ist. Bei maximal auseinanderbewegten Greifelementen gemäß Fig. 3c erfolgt nur noch eine Verschiebebewegung der Greif- und/oder Manipulationseinheit 20 entlang der Bewegungsachse 30 entgegen der Förderrichtung 14 (Fig. 3d), um zum darauffolgenden Gebinde 10 zu gelangen (Fig. 3e) und dies nach erneuten Zustellbewegungen 38 (Fig. 3f) der Greifelemente 34 in der bereits gezeigten Weise ebenfalls um 90 Grad zu drehen. Diese erneuten Zustellbewegungen gemäß Fig. 3e entsprechen den Darstellungen der Figuren 1b, 1c und 1d, während die weitere Drehbewegung den Darstellungen der Figuren 2a, 2b und 2c entspricht. Die Vorgänge können sich beliebig wiederholen, wobei keineswegs jedes Gebinde 10 gedreht werden muss, sondern aufgrund der Abstände der Greifelemente 34 voneinander (vgl. Fig. 1a, Fig. 3c, Fig. 3d, Fig. 3e) auch problemlos und ohne Kontaktierung und ohne Verzögerung dazwischen passieren kann.

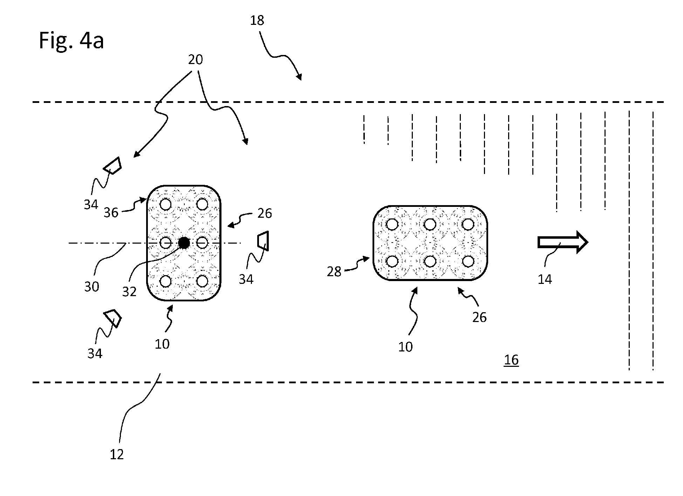

Die Figuren 4a bis 4e zeigen einen entsprechenden Drehvorgang eines Gebindes 10, das mit einer Greif- und/oder Manipuliereinheit 20 gedreht wird, die nur drei Greifelemente 34 aufweist, die bspw. an zwei vertikalen Seitenkanten 36 des Gebindes 10 und ungefähr mittig an einer Längsseite 26 angreifen können. Die Zustellbewegungen 38 der Greifelemente 34 und die Dreh- bzw. Schwenkbewegungen 40 sowie auch die anschließenden Verschiebebewegungen der Einheit 20 ähneln ansonsten weitgehend der bereits anhand der Figuren 1 bis 3 beschriebenen Vorgänge, so dass auf eine detaillierte Beschreibung an dieser Stelle verzichtet werden kann. Der wesentliche Unterschied besteht bei der gezeigten Anordnung mit dem einzelnen an der vorderen Längsseite 26 des Gebindes 10 angreifenden Greifelement 34 darin, dass ein nicht zu drehendes Gebinde 10 nicht berührungsfrei passieren kann. Sollen einzelne Gebinde 10 nicht gedreht werden, so muss zuvor die Einheit 20 in einen passenden Drehwinkel gebracht werden.

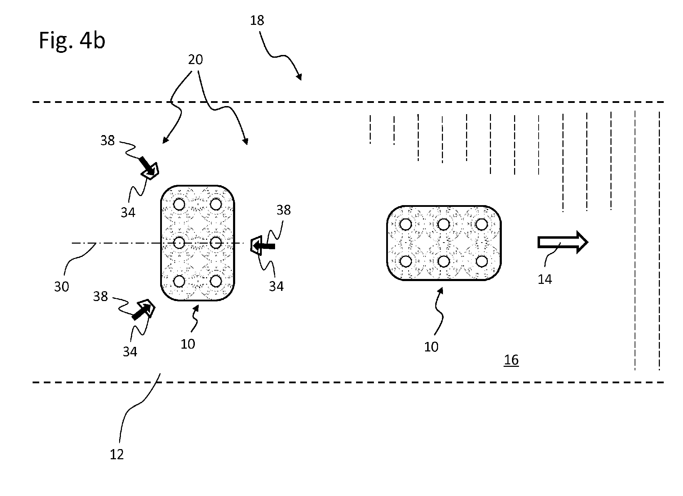

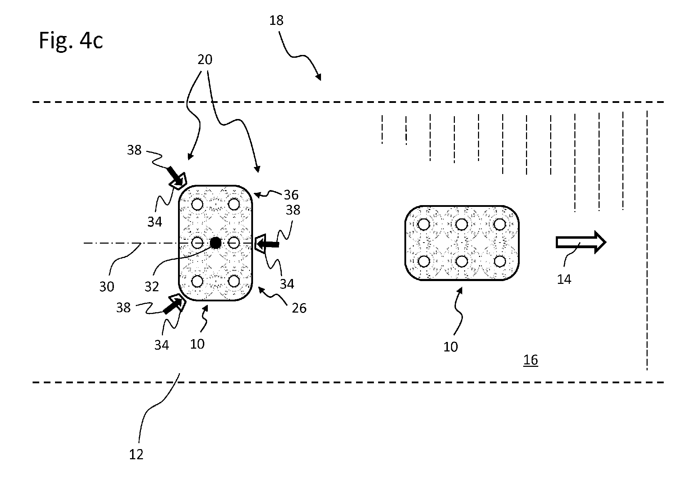

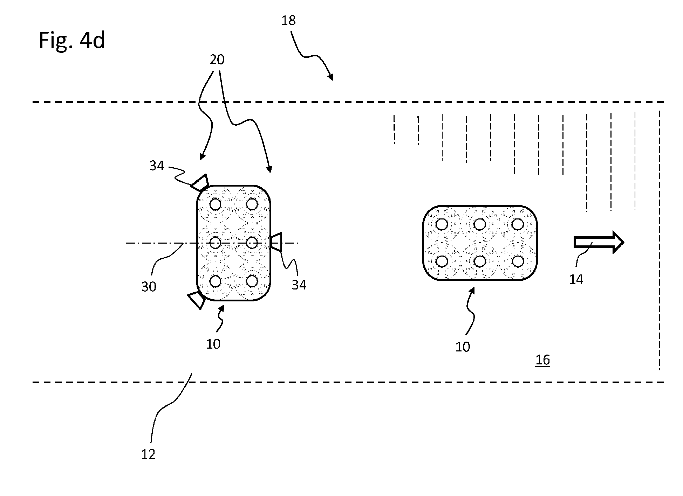

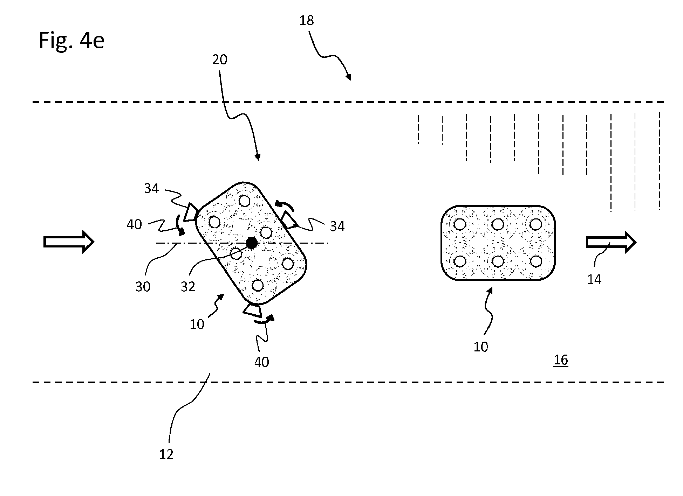

Die Fig. 4a zeigt eine über dem Gebinde 10 zentrierte Greif- und/oder Manipuliereinheit 20 mit noch beabstandeten Greifelementen 34, die anschließend in Richtung zum Gebinde 10 bewegt werden (Fig. 4b), bis sie dessen Seitenkanten 36 bzw. dessen Längsseite 26 kontaktieren (Fig. 4c), womit die Zustellbewegungen 38 enden (Fig. 4d). Nun wird das Gebinde 10 gedreht, indem die Greifelemente 34 jeweils in Richtung der Pfeile 40 (Fig 4e) verschwenkt werden, was einer Rotation der Greif- und/oder Manipuliereinheit 20 um die zentrale Drehachse 32 entspricht. Diesen Bewegungen sind jeweils Verschiebebewegungen der Einheit 20 entlang der Bewegungsachse 30 überlagert, um die Einheit 20 mit dem zu drehenden Gebinde 10 aufzusynchronisieren bzw. um die Einheit 20 entgegen der Förderrichtung 14 zum nachfolgenden Gebinde 10 zu bewegen (nicht gezeigt).

Die insgesamt vier Darstellungen der Fig. 5 verdeutlichen eine Ausführungsvariante einer Greif- und/oder Manipuliereinheit 20, wie sie zum Drehen der Gebinde gemäß den Figuren 1 bis 4 eingesetzt werden kann. Die insgesamt vier Greifelemente 34 sind hierbei jeweils durch vertikale Stäbe 46 gebildet, die jeweils um einen definierten Verstellweg in horizontaler Richtung verstellt werden können. Zu diesem Zweck weist der rotierbare Kopf 48 der Einheit 20, der an der Drehachse 32 aufgehängt ist, die entlang der Bewegungsachse 30 (vgl. Figuren 1 bis 4) verstellt werden kann, insgesamt vier Linearantriebe 50 auf, an denen die Stäbe 46 in linearer Richtung und konzentrisch zur mittigen Drehachse 32 und Aufhängung des Kopfes 48 verstellt werden können. Die mögliche Drehbewegung des Kopfes 48 um die Drehachse 32 ist durch den Pfeil 64 angedeutet, während die jeweils gleichsinnigen Stellbewegungen der Stäbe 46 durch die Richtungspfeile 54 angedeutet sind, die von der zentralen Drehachse 32 wegweisen (Fig. 5d) oder zu ihr hinzeigen (nicht dargestellt).

Die Figuren 5a und 5c zeigen die Einheit 20 jeweils in Seitenansicht, während die Figuren 5b und 5d jeweils Draufsichten auf den Kopf 48 zeigen.

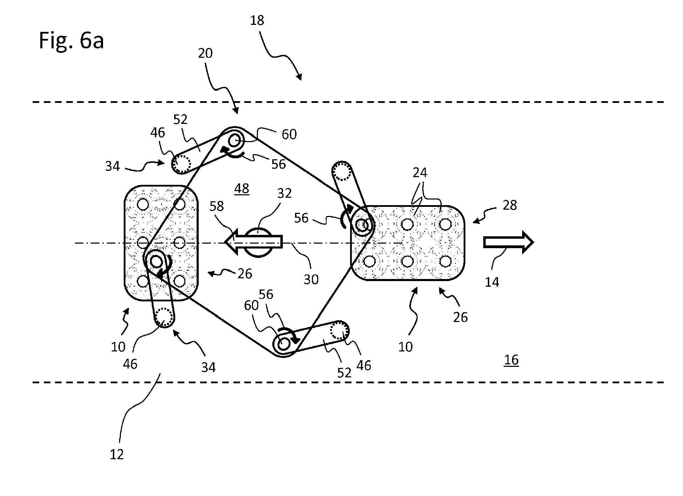

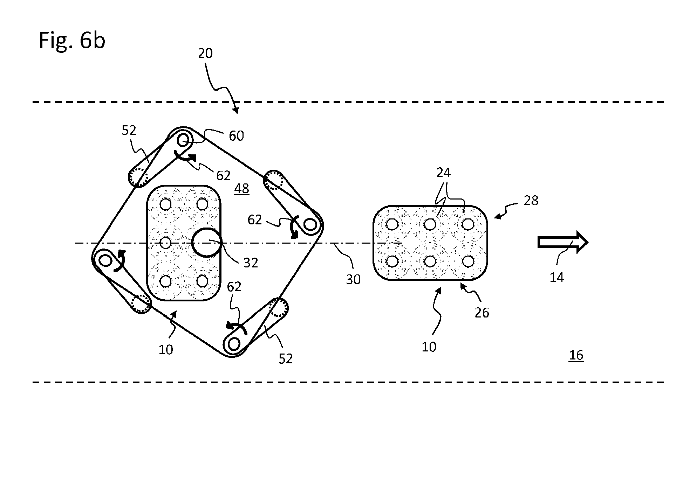

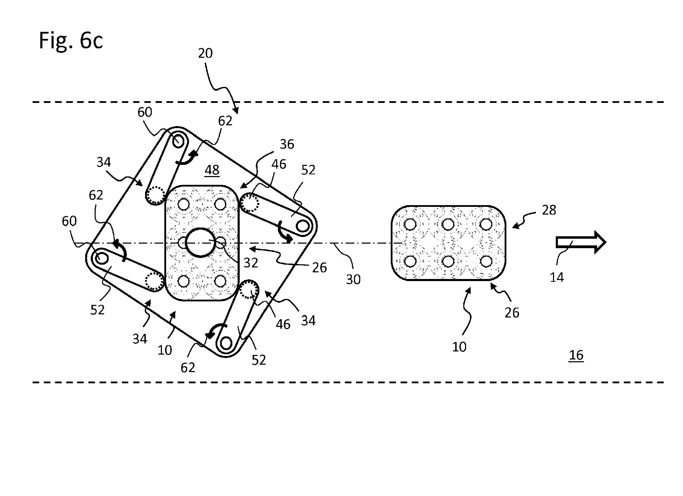

Die insgesamt drei schematischen Draufsichten der Fig. 6 zeigen aufeinander folgende Prozessphasen einer weiteren Variante des erfindungsgemäßen Verfahrens zur Handhabung von Artikeln, Stückgütern, Gruppierungen und/oder Gebinden 10 mittels einer anderen Ausführungsvariante der erfindungsgemäßen Greif- und/oder Manipulationseinheit 20, die sich im Aufbau und in einigen Bewegungsabläufen von der zuvor beschriebenen Variante unterscheidet. Auch im nachfolgend erläuterten Ausführungsbeispiel werden Gebinde 10 in Abständen zueinander auf der Horizontalfördereinrichtung 12 in gleichbleibender Geschwindigkeit in Förderrichtung 14 bewegt. Die Gebinde 10 stehen dabei auf der sich stetig bewegenden Förder- oder Auflageebene 16 der Horizontalfördereinrichtung 12 und werden durch deren stetige Bewegung in Förderrichtung 14 befördert. In den Figuren 6a bis 6c ist jeweils ein Förderabschnitt 18 gezeigt, dem eine Greif- und/oder Manipulationseinheit 20 zugeordnet ist, die oberhalb der Auflageebene 16 angeordnet ist.

Auch bei dieser Variante sind die zu manipulierenden Objekte jeweils durch Umreifungsgebinde 10 gebildet, wie sie bereits in den Figuren 1 bis 4 gezeigt sind. Die Umreifungsgebinde 10, bei denen die Behälter 24 in einer 2x3-Formation zusammengefasst sind, werden in Förderrichtung 14 zunächst mit ihren Längsseiten 26 voran befördert, sollen jedoch um 90 Grad gedreht werden, so dass sie in der weiteren Förderbewegung mit ihren Schmalseiten 28 voran befördert werden sollen, so dass sich ihre Längsseiten 26 parallel zu der Förderrichtung 14 befinden. Anstelle der gezeigten Umreifungsgebinde 10 können jedoch auf der Förder- oder Auflageebene 16 der Horizontalfördereinrichtung 12 auch beliebige andere Objekte, Artikel, Stückgüter oder Artikelgruppierungen befördert und mittels der erfindungsgemäßen Greif- und/oder Manipulationseinheit 20 gedreht und/oder verschoben werden.

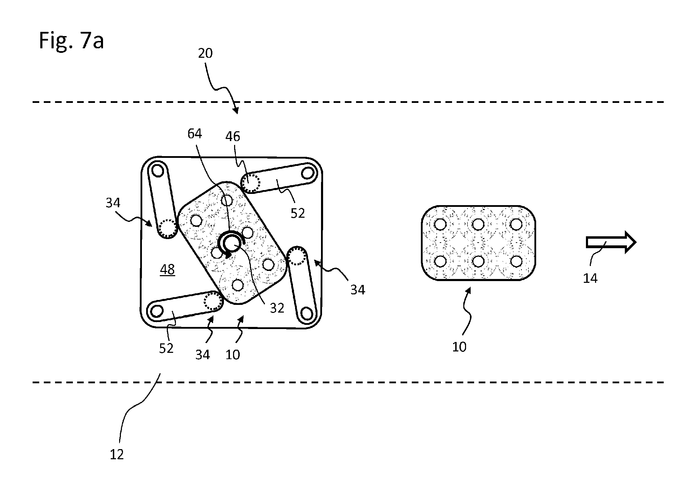

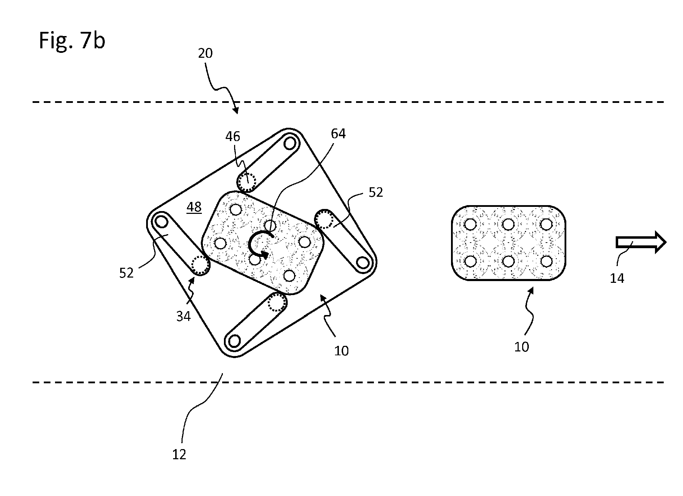

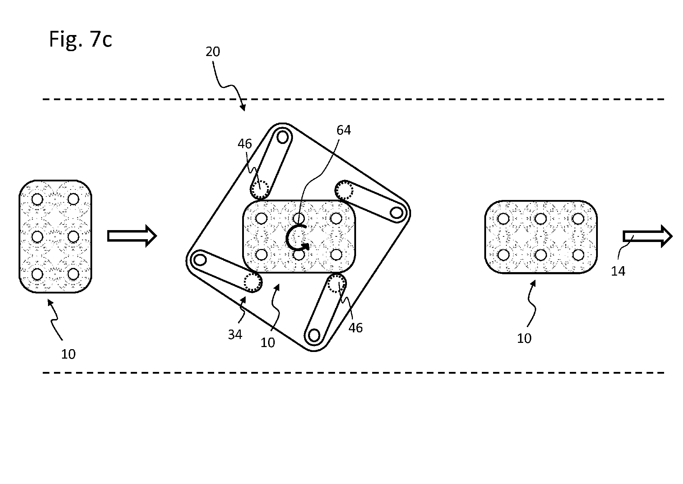

Die Greif- und/oder Manipulationseinheit 20 ist auch bei dieser Ausführungsvariante entlang einer in etwa horizontal ausgerichteten Bewegungsachse 30 beweglich bzw. in Förderrichtung 14 sowie gegen die Förderrichtung 14 verschiebbar und darüber hinaus um eine vertikale Achse 32 rotierbar, was in den Darstellungen der Fig. 7 näher verdeutlicht wird. Die Drehachse 32 liegt auf der Bewegungsachse 30 und befindet sich zumindest während einer Drehbewegung (Fig. 7) im Mittelpunkt des jeweils kontaktierten und gedrehten Gebindes 10.

Die Greif- und/oder Manipulationseinheit 20 weist in der gezeigten Ausführungsvariante einen um die vertikale Drehachse 32 rotierbaren und entlang der Bewegungsachse 30 verschiebbaren Kopf 48 mit insgesamt vier zueinander beweglichen und gegeneinander zustellbaren Greifelementen 34 zum Erfassen der einzelnen Artikel, Stückgüter, Gruppierungen und/oder Gebinde 10 und zum Drehen und/oder Verschieben dieser auf der Auflageebene 16 und/oder dem Förderabschnitt 18 auf. Die Greifelemente 34 sind jeweils durch vertikale Stäbe 46 gebildet, die jeweils an horizontal verlaufenden und schwenkbar an den vier Ecken des als viereckige Platte ausgebildeten Kopfes 48 angeordneten Schwenkhebeln 52 befestigt sind. Jeder der vier Schwenkhebel 52 ist jeweils an einem Eckbereich des Kopfes 48 gelagert und jeweils um eine vertikale Schwenkachse verschwenkbar bzw. rotierbar. Um ein Gebinde 10 greifen und festhalten zu können, sind die in der Greif- und/oder Manipulationseinheit 20 gelagerten und um ungefähr vertikale Schwenkachsen verschwenkbaren und/oder rotierbaren Schwenkhebel 52 mit den daran angeordneten vertikalen Stäben 46 jeweils gleichsinnig und weitgehend synchron in ungefähr gleichen Schwenkwinkeln verschwenkbar und/oder rotierbar, wie dies durch die Richtungspfeile 56 in Fig. 6a verdeutlicht ist.

Die Fig. 6a verdeutlicht eine gegen die Förderrichtung 14 entlang der Bewegungsachse 30 in Richtung des Pfeiles 58 verschobene Greif- und/oder Manipuliereinheit 20, deren Kopf 48 so verdreht ist, dass die Stäbe 46 mit nach außen geschwenkten Schwenkhebeln 52 an dem nachfolgend zu drehenden Gebinde 10 vorbeibewegt werden können, ohne es zu touchieren. Die Schwenkhebel 52 sind in Pfeilrichtung 56 um die ihre jeweiligen Drehgelenke 60 mit vertikalen Drehachsen an den Eckbereichen des Kopfes 48 soweit nach außen gedreht, dass sie den Grundriss des Kopfes 48 leicht überragen.

Die Fig. 6b zeigt eine nachfolgende Prozessphase, bei der sich der Kopf 48 der Greif- und/oder Manipuliereinheit 20 bereits über dem zu drehenden Gebinde 10 befindet, so dass die Schwenkhebel 52 bereits um ihre Drehgelenke 60 nach innen verschwenkt werden können, was durch die Pfeile 62 verdeutlicht ist. Eine weitere Rückwärtsbewegung des Kopfes 48 entlang der Bewegungsachse 30 ist in dieser Position normalerweise nicht mehr notwendig, da das sich in Förderrichtung 14 bewegende Gebinde 10 exakt mittig unter die Drehachse 32 der Einheit 20 fährt, was in Fig. 6c verdeutlicht ist. Dort befindet sich der Kopf 48 in zentrierter Position über dem Gebinde 10, so dass die Schwenkhebel 52 jeweils in Pfeilrichtung 62 weiter nach innen bewegt werden, bis die Stäbe 46 der Greifelemente 34 jeweils die Längsseiten 26 des Gebindes 10 in Nähe der jeweiligen Seitenkanten 36 kontaktieren. Je nach Länge der Schwenkhebel 52, der Abmessungen des Gebindes 10 und der Abstände der Drehgelenke 60 voneinander können die Stäbe das Gebinde 10 auch an den Seitenkanten 36 oder ggf. auch teilweise an den Schmalseiten 28 kontaktieren, um es anschließend zu drehen.

Dieser Drehvorgang um die zentrale Drehachse 32 in Pfeilrichtung 64 ist in den Figuren 7a, 7b und 7c verdeutlicht. Während dieser Drehung des Gebindes 10 um 90 Grad entgegen dem Uhrzeigersinn folgt die Greif- und/oder Manipulationseinheit 20 vorzugsweise der Horizontalfördereinrichtung 12 mit gleicher Geschwindigkeit in Förderrichtung 14, so dass das Gebinde 10 während seiner Drehung 64 nicht gegenüber vorausbewegten und nachfolgenden Gebinden 10 verschoben wird.

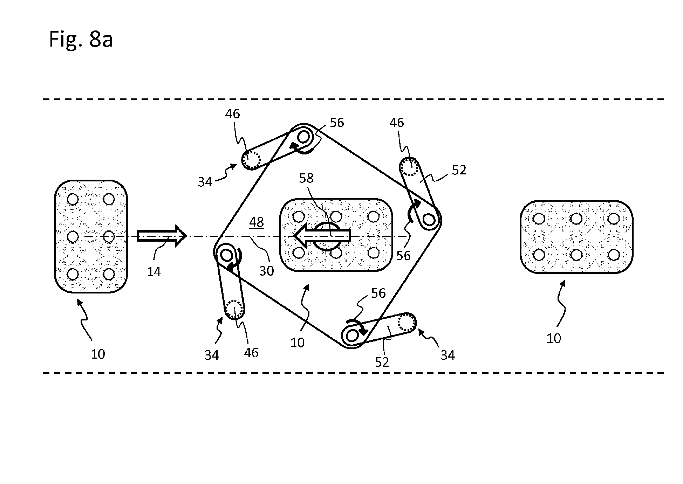

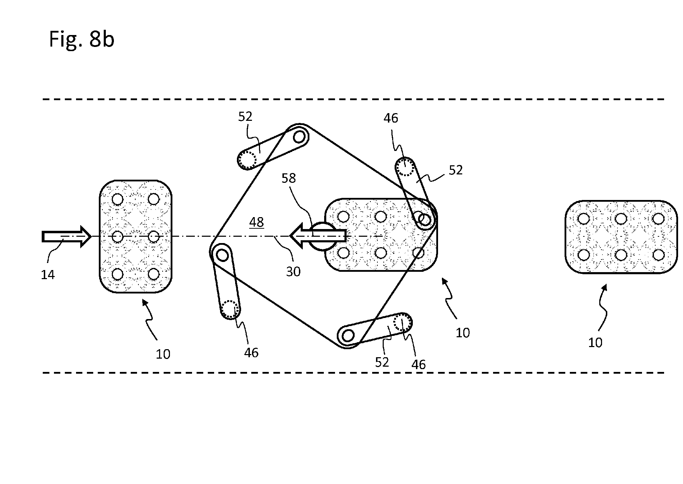

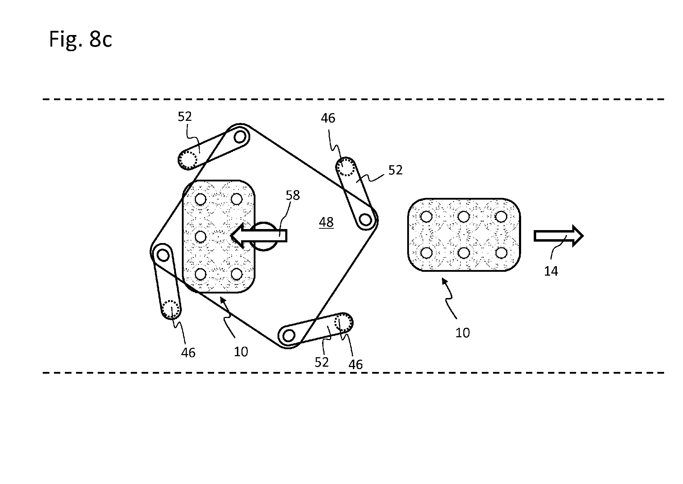

Nach erfolgter Drehung öffnen sich die Greifelemente 34 wieder durch synchrone Rückdrehungen der Schwenkhebel 52 mit den daran angeordneten Stäben 46 in Schwenkrichtung 56 (Fig. 8a), wobei gleichzeitig der Kopf 48 wieder gegen die Förderrichtung 14 entlang der Bewegungsachse 30 in Pfeilrichtung 58 zum nachfolgenden Gebinde 10 bewegt wird (Fig. 8b). Die Schwenkhebel 52 bleiben während dieser Rückbewegung 58 in ihrer weit geöffneten Stellung, bei der sich die Stäbe 46 jeweils außerhalb des Umrisses des Kopfes 48 befinden, so dass das Gebinde 10 ohne Kontaktierung zwischen den Stäben 46 hindurchfahren kann (Fig. 8c).

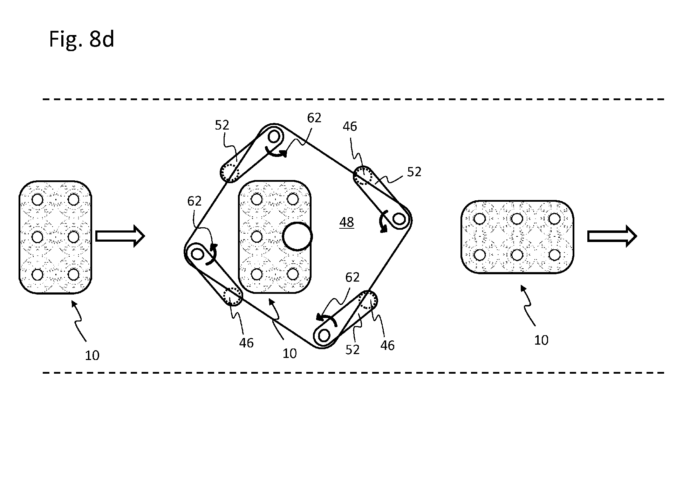

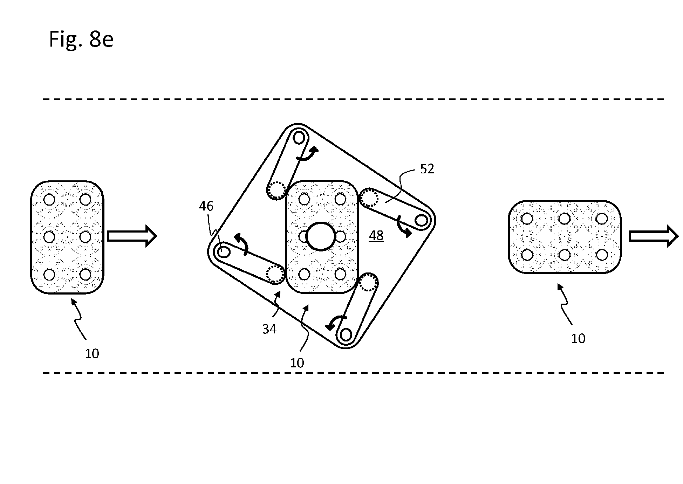

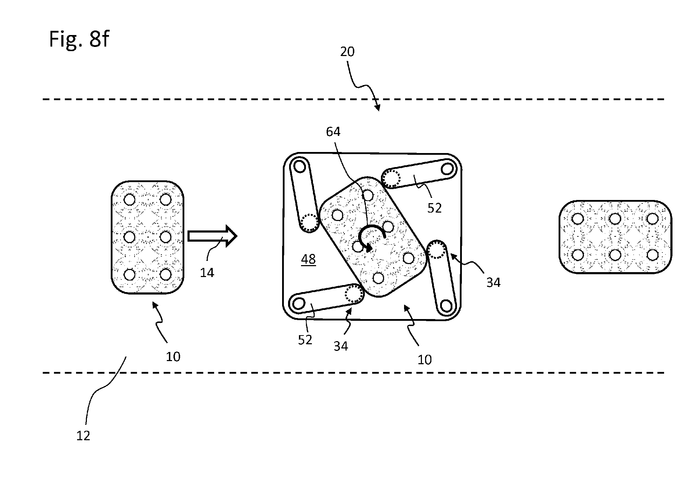

Sobald sich der Kopf 48 über dem Gebinde 10 befindet, werden die Schwenkhebel 52 wieder in Schwenkrichtung 62 nach innen in Richtung zum Gebinde 10 bewegt (Fig. 8d), bis das Gebinde 10 schließlich wieder von allen vier Stäben 46 kontaktiert ist (Fig. 8e), so dass es in gleicher Weise wie in Fig. 7 gezeigt, gedreht werden kann (Fig. 8f).

Soll dagegen ein einzelnes Gebinde 10 nicht gedreht werden, so bleiben die Schwenkhebel 52 jeweils entsprechend Fig. 8b und Fig. 8c geöffnet, so dass das Gebinde 10 unter dem Kopf 48 hindurchfährt, ohne dass es von den Stäben touchiert oder gedreht wird.

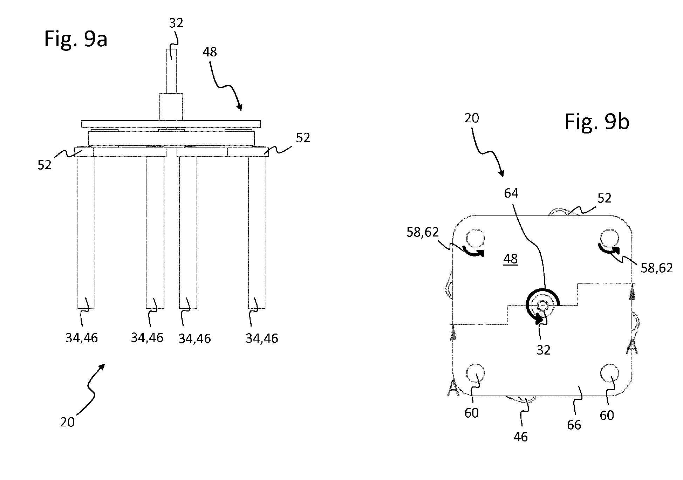

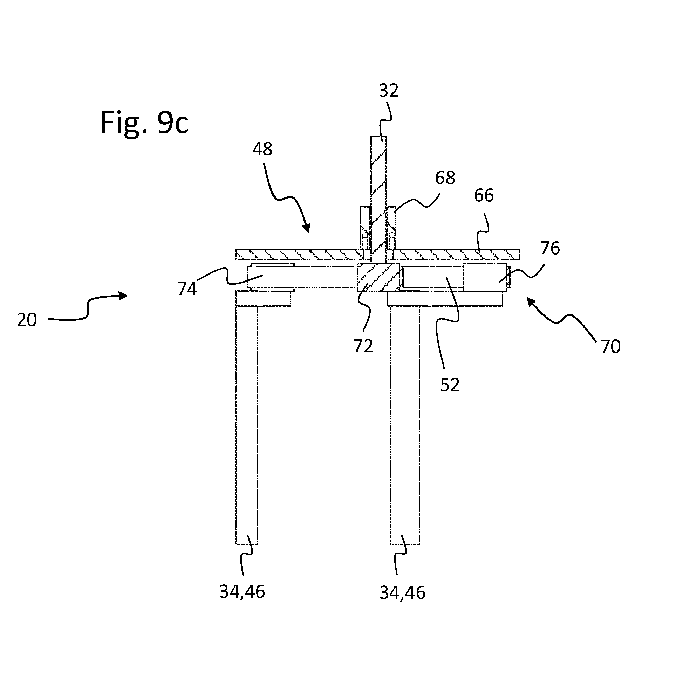

Die drei Ansichten der Fig. 9 verdeutlichen eine mögliche Ausführungsvariante der Greif- und/oder Manipuliereinheit 20, wie sie anhand ihrer Bewegungsabläufe in den Figuren 6 bis 8 beschrieben wurde und wie sie zum Drehen der Gebinde 10 eingesetzt werden kann. Die insgesamt vier Greifelemente 34 sind hierbei wiederum jeweils durch vertikale Stäbe 46 gebildet, die jeweils um einen definierten Verstellweg in horizontaler Richtung verstellt werden können. Zu diesem Zweck weist der rotierbare Kopf 48 der Einheit 20, der an der Drehachse 32 aufgehängt ist, die entlang der Bewegungsachse 30 (vgl. Figuren 1 bis 4) verstellt werden kann, insgesamt vier Schwenkhebel 52 auf, an deren Ende die vertikalen Stäbe 46 befestigt sind. Die Schwenkhebel 52 sind an den vier Eckbereichen der viereckigen Platte 66 des Kopfes 48 in Drehgelenken 60 gelagert, so dass sie jeweils um vertikale Schwenkachsen bewegt werden können. Auf diese Weise können die Stäbe 46 jeweils auseinander und zusammen bewegt werden. Die mögliche Drehbewegung des Kopfes 48 um die Drehachse 32 ist durch den Pfeil 64 angedeutet, während die jeweils gleichsinnigen Stellbewegungen der Schwenkhebel 52 mitsamt den Stäben 46 durch die Richtungspfeile 58 und 62 angedeutet sind, wobei sie nach außen oder nach innen bewegt werden.

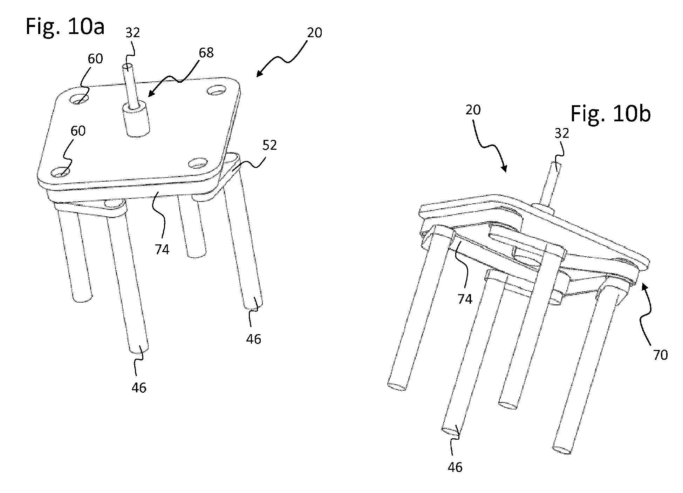

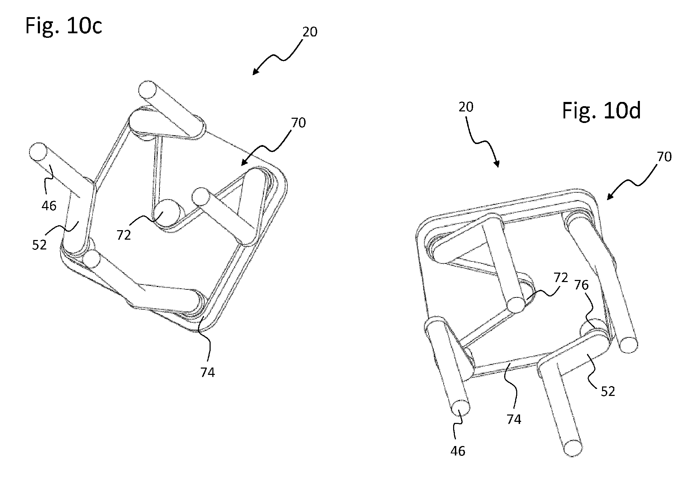

Die Drehachse 32 ermöglicht die Drehung des gesamten Kopfes 48 mitsamt den daran angelenkten Schwenkhebeln 52 und Stäben 46. Diese Drehungen sind durch den Pfeil 64 angedeutet. Weiterhin benötigen die Schwenkhebel 52 einen eigenen Antrieb, der durch die dünnere Antriebswelle 68 realisiert ist, die koaxial zur ersten Drehachse 32 angeordnet ist. Die Antriebswelle 68 wirkt mit einem Riemenantrieb für die Schwenkhebel 52 zusammen, wie er in den Darstellungen der Fig. 10 sowie im Längsschnitt der Fig. 9c gezeigt ist.

Die Fig. 9 zeigt die Einheit 20 in einer Seitenansicht, während die Fig. 9b eine Draufsicht zeigt. Die Fig. 9c zeigt einen Längsschnitt der Einheit 20 mit der koaxial zur Drehachse 32 und Aufhängung des Kopfes 48 angeordneten Antriebswelle 68 für den Riemenantrieb 70 der Schwenkhebel 52. Die Antriebswelle 68 ist mit einem Treibrad 72 drehfest verbunden, um das der Riemen 74 umläuft, der um alle vier Antriebsrollen 76 für die Schwenkhebel 52 gelegt ist. Die Antriebsrollen 76 sind Teile der Drehgelenke 60 der Schwenkhebel 52 und sorgen für deren Schwenkbewegungen in Pfeilrichtungen 58 und 62.

Diese Kraftübertragung mit dem Riemenantrieb 70 ist anhand der Figuren 10a, 10b, 10c und 10d deutlich erkennbar. Bei einer Rotation des zentralen Treibrades 72 wird der Riemen 74 bewegt, der wiederum über alle vier Antriebsrollen 76 gelegt ist und dort für gleichsinnige und synchrone Schwenkbewegungen der Schwenkhebel 52 mit den daran befestigten Stäben 46 sorgt. Je nach Drehrichtung des über die Antriebswelle 68 in Rotation versetzten Treibrades 72 werden die Schwenkhebel 52 synchron nach innen oder außen bewegt und damit ein Gebinde 10 (Fig. 6) kontaktiert oder freigegeben.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Gebinde, Umreifungsgebinde
- 12: Horizontalfördereinrichtung
- 14: Förderrichtung
- 16: Förder- / Auflageebene
- 18: Förderabschnitt
- 20: Einheit, Greif-/ Manipulationseinheit
- 22: Umreifungsband
- 24: Behälter, Getränkebehälter
- 26: Längsseite
- 28: Schmalseite
- 30: Bewegungsachse
- 32: Drehachse, vertikale Achse, Vertikalmittelachse
- 34: Greifelement
- 36: Seitenkante, Längskanten
- 38: Zustellrichtung, Zustellbewegung
- 40: Richtungspfeile, Dreh-/ Schwenkbewegung
- 42: Richtungspfeile, Stellrichtung
- 44: Verschiebebewegung
- 46: Stäbe
- 48: Kopf
- 50: Linearantrieb
- 52: Schwenkhebel
- 54: Richtungspfeile
- 56: Richtungspfeile, Schwenkrichtung
- 58: Richtungspfeile, Rückbewegung
- 60: Drehgelenke
- 62: Richtungspfeile, Schwenkrichtung
- 64: Richtungspfeile, Drehbewegung, Drehung
- 66: Platte
- 68: Antriebswelle
- 70: Riemenantrieb
- 72: Treibrad
- 74: Riemen
- 76: Antriebsrollen

## Patentansprüche

1. Einer Auflageebene (16) und/oder einem Förderabschnitt (18) einer Vorrichtung zur Handhabung, Förderung, Gruppierung und/oder Verpackung von Artikeln, Stückgütern, Gruppierungen und/oder Gebinden (10) zuordenbare oder zugeordnete und oberhalb der Auflageebene (16) und/oder dem Förderabschnitt (18) zumindest entlang einer in etwa horizontal ausgerichteten Bewegungsachse (30) bewegliche und/oder um eine vertikale Achse rotierbare Greif- und/oder Manipulationseinheit (20), die wenigstens drei zueinander bewegliche und/oder gegeneinander zustellbare Greifelemente (34) zum Erfassen einzelner Artikel, Stückgüter, Gruppierungen und/oder Gebinde (10) und zum Drehen und/oder Verschieben dieser auf der Auflageebene (16) und/oder dem Förderabschnitt (18) aufweist.

2. Einheit nach Anspruch 1, bei der die Greif- und/oder Manipulationseinheit (20) einen Rotationsantrieb mit einer in etwa vertikalen Drehachse aufweist, welcher oberhalb der Auflageebene (16) und/oder dem Förderabschnitt (18) angeordnet ist.

3. Einheit nach Anspruch 1 oder 2, bei der die Greif- und/oder Manipulationseinheit (20) in wenigstens einer Richtung entlang einer in etwa horizontalen Bewegungsachse linear beweglich ist, wobei diese Bewegungsachse oberhalb und ungefähr parallel zu einer Förderrichtung (14) der Auflageebene (16) bzw. dem Förderabschnitt (18) liegt.

4. Einheit nach einem der Ansprüche 1 bis 3, bei der die verstellbaren Greifelemente (34) durch Stäbe (46), Schieber, Stangen o. dgl. gebildet sind, die den jeweiligen Artikel bzw. das jeweilige Stückgut oder Gebinde (10) bzw. die jeweilige Gruppierung von zumindest drei Außenseiten angreifen.

5. Einheit nach Anspruch 4, bei der die verstellbaren Greifelemente (34) jeweils ungefähr vertikale Längserstreckungsrichtungen aufweisen und jeweils innerhalb von ungefähr horizontal ausgerichteten Bewegungsebenen reversibel beweglich sind.

6. Einheit nach Anspruch 4 oder 5, bei der die wenigstens drei Greifelemente (34) konzentrisch zueinander verstellbar, insbesondere entlang von horizontalen Linearachsen verschiebbar sind.

7. Einheit nach einem der Ansprüche 1 bis 5, bei der die wenigstens drei Greifelemente (34) jeweils an Schwenkhebeln (52) angeordnet sind, die in der Greif- und/oder Manipulationseinheit (20) gelagert und um ungefähr vertikale Schwenkachsen verschwenkbar und/oder rotierbar sind.

8. Einheit nach Anspruch 7, bei der die Schwenkhebel (52) mit den daran angeordneten Greifelementen (34) jeweils gleichsinnig und weitgehend synchron in ungefähr gleichen Schwenkwinkeln verschwenkbar und/oder rotierbar sind.

9. Handhabungseinrichtung eines Förderabschnittes (18) einer Vorrichtung zur Handhabung, Förderung, Gruppierung und/oder Verpackung von Artikeln, Stückgütern, Gruppierungen und/oder Gebinden (10), mit einer oberhalb der Auflageebene (16) und/oder dem Förderabschnitt (18) angeordneten und/oder um eine vertikale Achse rotierbaren Greif- und/oder Manipulationseinheit (20) gemäß einem der Ansprüche 1 bis 8, die wenigstens drei zueinander bewegliche und/oder gegeneinander zustellbare Greifelemente (34) zum Erfassen einzelner Artikel, Stückgüter, Gruppierungen und/oder Gebinde (10) und zum Drehen und/oder Verschieben dieser auf der Auflageebene (16) und/oder dem Förderabschnitt (18) aufweist, wobei die Greif- und/oder Manipulationseinheit (20) entlang einer in etwa horizontal ausgerichteten Bewegungsachse, die parallel zur Förderrichtung (14) des Förderabschnittes (18) orientiert ist, linear beweglich ist.

10. Verfahren zur Handhabung von Artikeln, Stückgütern, Gruppierungen und/oder Gebinden (10), die auf einer Auflageebene einer Horizontalfördereinrichtung (12) befördert und dort während ihres Transports mittels einer Handhabungseinrichtung verschoben und/oder gedreht werden, indem die Artikel, Stückgüter, Gruppierungen und/oder Gebinde (10) an wenigstens drei Außenseiten mittels von außen zustellbaren Greifelementen (34) einer Handhabungseinrichtung kontaktiert und unter annähernd synchroner Bewegung der Handhabungseinrichtung in Förderrichtung (14) der Horizontalfördereinrichtung (12) bewegt und/oder gedreht werden, wonach die Greifelemente (34) aus dem Kontakt mit den Artikeln, Stückgütern, Gruppierungen und/oder Gebinden (10) gebracht werden und dieses zwischen den auseinander bewegten Greifelementen (34) passieren lassen, wonach die Handhabungseinrichtung gegen die Förderrichtung (14) zu einem folgenden Artikel, Stückgut oder Gebinde (10) bzw. zu einer folgenden Gruppierung entgegen der Förderrichtung (14) bewegt wird und/oder dieses in Förderrichtung (14) zwischen den Greifelementen (34) hindurch- oder vorbeipassieren lässt, bis die Handhabungseinrichtung in Positionierung über dem Artikel, Stückgut oder Gebinde (10) bzw. der Gruppierung ist und die Greifelemente (34) in Kontakt mit dessen/deren Außenseiten gebracht werden, um es/sie zu drehen und/oder zu verschieben.
